(19) **Europäisches Patentamt / European Patent Office / Office européen des brevets**

(11) **EP 4 462 294 B1**

(12) **EUROPEAN PATENT SPECIFICATION**

(45) Date of publication and mention
of the grant of the patent:
**23.07.2025 Bulletin 2025/30**

(21) Application number: **23186680.7**

(22) Date of filing: **20.07.2023**

(51) International Patent Classification (IPC):
*G06F 21/55* (2013.01)   *G06N 20/00* (2019.01)
*H04L 9/40* (2022.01)

(52) Cooperative Patent Classification (CPC):
**H04L 63/1458; G06F 21/552; G06N 20/00**

(54) **DATA RETRIEVAL CONTROL**

DATENABRUFSTEUERUNG

COMMANDE D'EXTRACTION DE DONNÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.05.2023 US 202363501446 P**

(43) Date of publication of application:
**13.11.2024 Bulletin 2024/46**

(73) Proprietor: **Featurespace Limited**
**Cambridge, Cambridgeshire CB4 0GF (GB)**

(72) Inventor: **EXCELL, David**
**Cambridge, CB4 0GF (GB)**

(74) Representative: **Mishcon de Reya LLP**
**Africa House**
**70 Kingsway**
**London WC2B 6AH (GB)**

(56) References cited:
**EP-A1- 3 812 929    US-A1- 2022 207 135**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

Technical Field

The present disclosure relates to data retrieval control.

In particular, but not exclusively, the present disclosure relates to measures (for example methods, systems, servers, and computer programs) to perform data retrieval control.

Background Art

Various measures exist in the art for controlling data retrieval.

For example, a firewall may control incoming requests for data based on preconfigured security rules. A firewall can help to protect a computing resource behind the firewall, such as a server and/or data store, against denial-of-service (DoS) and distributed denial-of-service (DDoS) attacks, as well as other types of malicious activity. A DoS attack is also known as a flood attack.

Artificial intelligence (AI) may be used to calculate a variable associated with an incoming request. Such a variable will generally be referred to herein as a "request-based variable" accordingly. An example of a request-based variable is a risk score associated with the request. A request-based variable may be used, in-turn, to automate a decision such as whether the incoming request should be accepted or declined. Accuracy of such automated decisions generally increases as the amount of data used by the AI increases.

Prior art document EP3812929-A1 discloses a method for utilizing neural network model to determine risk, involving causing new application programming interface request to be blocked or permitted based on risk associated with new application programming interface request.

Summary

According to a first aspect, there is provided a data retrieval control method, the method comprising:

> receiving a request;
> generating a request-based variable using data associated with the request, wherein the data is input to a request-based variable generation model to generate the request-based variable;
> in response to determining that using further data as further input to the request-based variable generation model may alter the request-based variable, determining whether or not to retrieve the further data based on a comparison involving a data retrieval loss indicator and a data non-retrieval loss indicator, the data retrieval loss indicator being indicative of a loss associated with retrieving the further data and the data non-retrieval loss indicator being indicative of a loss associated with not retrieving the further data; and
making a decision associated with the request based on a determinative request-based variable, wherein, when the comparison indicates that the data retrieval loss outweighs the data non-retrieval loss:

> the determination is not to retrieve the further data; and
> the request-based variable is used as the determinative request-based variable, and

wherein, when the comparison indicates that the data non-retrieval loss outweighs the data retrieval loss:

> the determination is to retrieve the further data;
> the further data is retrieved;
> the request-based variable is regenerated using the request data and the further data as inputs to the request-based variable generation model to generate a regenerated request-based variable; and
> the regenerated request-based variable is used as the determinative request-based variable.

According to a second aspect, there is provided a decisioning server comprising:

> a request processor;
> a request-based variable generator;
> a request-based variable generation model;
> a decisioning component;
> a comparator; and
> a data retrieval controller,
> wherein the decisioning server is configured to perform a method in accordance with the first aspect of the present disclosure.

According to a third aspect, there is provided a system, server and/or computer program configured to perform a method in accordance with the first aspect of the present disclosure.

Brief Description of the Drawings

Certain embodiments of the present disclosure will now be described with reference to the accompanying drawings, in which:

> FIG. 1 is a schematic diagram showing an example of a data retrieval control system.
>
> FIG. 2 is a schematic diagram showing part of the system shown in FIG. 1 with and without data retrieval control.

FIGs. 3A and 3B are flowcharts showing an example of a data retrieval control method.

FIG. 4 is an example graph of request score versus density and showing a first example request score region.

FIG. 5 is another example graph of request score versus density and showing a second example request score region.

FIG. 6 is another example graph of request score versus density and showing a third example request score region.

FIG. 7 is a schematic diagram showing an example of a data retrieval control procedure.

FIG. 8 is a schematic block diagram showing an example of a decisioning server.

FIG. 9 is a process flow diagram showing an example of a data retrieval control method.

FIG. 10 is a schematic diagram showing another example of a data retrieval control system.

Detailed Description

Without loss of generality, the present disclosure relates to data retrieval control and optimised data retrieval.

The term "data retrieval" is used herein to mean retrieving, using any mechanism, data of any type and not to be limited to data recovery, i.e. recovering data that may have been lost, corrupted or the like.

As explained above, existing AI-based decision automation systems are based on the premise that more data is better because it improves accuracy. This is generally true.

However, using more data is not an inconsequential decision. For example, using further data creates several trade-offs.

One example trade-off is data privacy. Using further data can increase the likelihood of incurring risks around individual privacy, i.e. data privacy of individuals. Using further data can also place additional requirements to adhere to local privacy regulation.

Another example trade-off is data security. Transmitting and/or storing unnecessary data increases the exposure if security of a decisioning system and/or associated networks is breached.

Another example trade-off is resiliency. Capturing or requesting further data adds complexity to the decision-making process. This increases the surface error for failures in obtaining the data and/or errors within the data. This can result in failures and/or inaccuracies when generating, e.g. calculating, a request-based variable. The lower the computational complexity, the more resilient the system may be.

Another example trade-off is latency. Retrieving data from third party or local systems is not instantaneous. This is particularly the case when the data is sourced from outside of a local network. This therefore has an impact on the amount of time taken to generate a request-based variable, such as a risk score, and to communicate a decision to one or more entities, such as a requesting system. In time-critical, low-latency systems, this is particularly relevant.

Another example trade-off is downstream computing resource impact. Retrieving further data may increase computing resource requirements for downstream systems, for example where the further data requires additional processing by the downstream system. While such additional processing may be tolerable, or even beneficial, in some scenarios, it may be undesirable in other situations. For example, if the downstream system is operating at a near-capacity level, additional processing requests may result in instability or even failure of the downstream system.

Again, without loss of generality, examples described herein optimise trade-offs such as these, on a request-by-request basis, while maintaining accuracy.

Making such decisions on a request-by-request enables highly tuned optimisation. In contrast, existing systems that acquire data to make automated decisions are managed as an optimisation over the entire population of requests rather than for individual requests.

With the increased adoption of AI to make automated decisions, the loss or potential loss in generating these decisions is not insignificant.

Such losses may be related to data privacy, data sectary, resiliency, latency, or otherwise.

Such losses may be related to consequences of inaccurate decisions. For example, the consequence of rejecting a legitimate request may be more significant for a premium user or subscriber than for a non-premium user or subscriber.

Such losses may be dependent on an attribute of the request. For example, it may be more important to make an accurate decision (in other words, the losses may be more significant) on a high-priority request compared to a low-priority request, where priority is an attribute of the request. Another example attribute of a request is a requesting user device type. For example, the losses may vary depending on whether the requesting user device is a desktop computing device or a mobile computing device. As another example, data retrieval loss may depend on a country of origin of the request, which may be indicated by an attribute of the request. In particular, a given country may have low quality data for a preferred provider, meaning that a secondary provider would need to be accessed for higher quality data. This comes with losses, for example in terms of latency. As another example, certain brands of user device may provide limited tracking data in connection with their users. It may therefore be more complex to validate user activity on such user devices than on another brand of user device.

Examples described herein can maintain accuracy, while being more precise in terms of inputs used to arrive at the decision and therefore mitigating the losses and/or risks associated with a range of data practices.

Examples described herein are compatible with high-volume requests, such as many thousands of requests per second. Request volumes may also vary over time, e.g. unexpectedly.

As will be explained in more detail below, in examples, a decisioning server can make a series of calculations and comparisons to decide whether to accept (or "authorise" or "allow") a request or whether to decline (or "refuse" or "reject") the request. The decisioning server can select which (if any) data is to be retrieved and/or data stores are to be accessed to obtain input needed to maintain accuracy of the decisions whilst optimising trade-offs such as data privacy, data security, resiliency, and latency. Such data stores may be internal and/or external as will be described in more detail below.

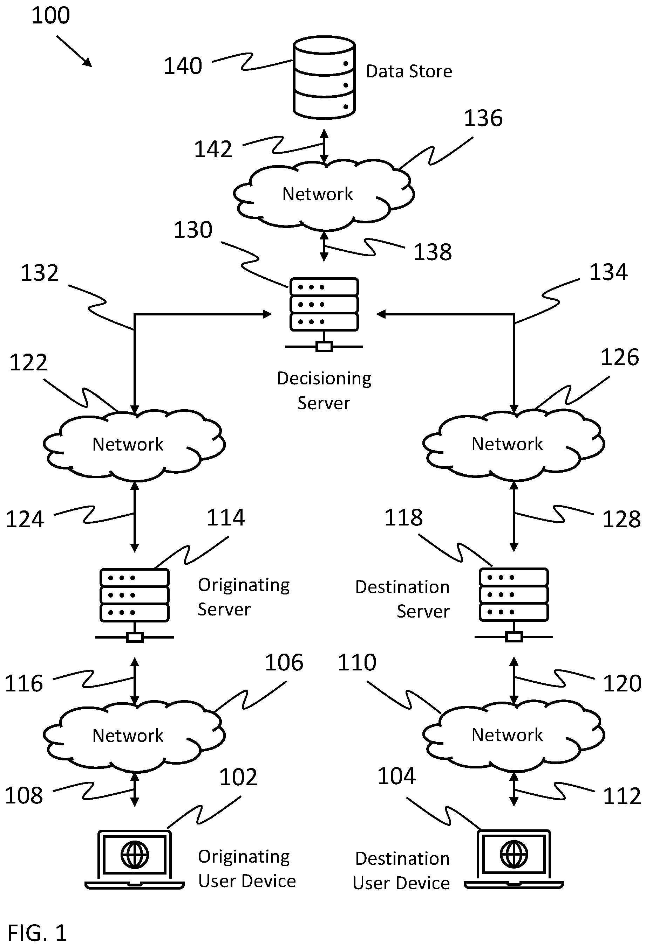

Referring to FIG. 1, there is shown an example system 100. The system 100 implements data retrieval control and may be referred to as a data retrieval control system accordingly.

The system 100 comprises first and second user devices 102, 104. The term "user device" is used herein to mean any device that can be used by a user of the system 100. User devices may take various forms. Example forms include, but are not limited to, desktop computers, laptop computers, tablet computing devices and smartphones.

Although the system 100 comprises two user devices 102, 104 in this specific example, other example systems can include a different number of user devices.

In particular, in some examples, the system 100 comprises no user devices or comprises one user device. Other elements of the system 100 may be modified or omitted accordingly. For example, the system 100 may have a service-to-service type architecture and may not comprise any user devices. Examples of such architectures include, but are not limited to, application programming interface (API)-based architectures and file sharing architectures.

In this example, the first user device 102 is an originating user device and is associated with an originating entity (not shown). The originating user device may belong to the originating entity or may merely be being used by the originating entity. The originating entity originates a request in the system 100.

In this example, the second user device 104 is a destination user device and is associated with a destination entity (not shown). The destination entity is an intended destination of a request and/or something associated with the request. As will be explained in more detail below, a request intended for a destination entity may not, in fact, reach the destination entity.

The originating entity and/or the destination entity may take various different forms. Example forms include, but are not limited to, legal persons and natural persons. A natural person may be a user of the system 100.

The originating user device 102 is communicatively coupled to a first network 106 via a first communicative coupling 108.

The term "network" is used herein to mean a computer network, i.e. a set of computers that share resources.

The term "communicative coupling" is used herein to mean any type of coupling that enables communication between entities. The coupling may be wired and/or wireless. The coupling may be direct or indirect.

The destination user device 104 is communicatively coupled to a second network 110 via a second communicative coupling 112.

A first server 114, which in this example is an originating server, is communicatively coupled to the first network 106 via a third communicative coupling 116.

The term "server" is used herein to mean a computing entity that provides services to another computing entity. A server may be implemented in hardware and/or software. A server may comprise one or more server components. Server components may be co-located or may be geographically distributed.

The originating server 114 handles requests associated with the originating user device 102. For example, the originating server 114 may handle requests to and/or from the originating user device 102.

A second server 118, which in this example is a destination server, is communicatively coupled to the second network 110 via a fourth communicative coupling 120.

The destination server 118 handles requests associated with the destination user device 104. For example, the destination server 118 may handle requests to and/or from the destination user device 104.

Although only a single originating server 114 and a single destination server 118 are shown in FIG. 1, multiple originating servers 114 and/or multiple destination servers 118 may be provided in other example systems.

The originating server 114 is communicatively coupled to a third network 122 via a fifth communicative coupling 124.

The destination server 118 is communicatively coupled to a fourth network 126 via a sixth communicative coupling 128.

A decisioning server 130 is communicatively coupled to the third network 122 via a seventh communicative coupling 132. The decisioning server 130 is also communicatively coupled to the fourth network 126 via an eighth communicative coupling 134.

The decisioning server 130 makes decisions associated with requests communicated in the system 100.

Such requests may ask that the decisioning server 130 make a decision associated with another request. For example, an initial request may be received by an entity in the system 100 and that entity may send a decisioning request, based on the initial request, to the decisioning server 130.

As such, references to an "originating entity" should be understood to refer to an entity that originates a particular request in the system 100 and that such a request may be based on a request that originates from another entity.

Although only a single decisioning server 130 is shown in FIG. 1, multiple decisioning servers 130 may be provided in other example systems.

The decisioning server 130 is communicatively coupled to a fifth network 136 via a ninth communicative coupling 138.

A data store 140 is communicatively coupled to the fifth network 136 via a tenth communicative coupling 142.

The term "data store" is used herein to mean any entity that can store data. The data store may comprise volatile and/or non-volatile memory. This includes, but is not limited to, random access memory (RAM), static RAM (SRAM), dynamic RAM (DRAM), magnetic storage, solid-state storage, and flash memory. Combinations of one or more of these may also be used for the storage of data, as technically appropriate (e.g. using faster access volatile memory for frequently accessed data).

The data store may store data in various different ways, for example in one or more databases. A data store may comprise one or more data store components. Data store components may be co-located or may be geographically distributed.

The data store 140 stores data. The data may comprise a signal (which may also be referred to as "signal data").

Although only a single data store 140 is shown in FIG. 1, multiple data stores 140 may be provided in other examples. Some or all of the data stores 140 may be of the same type as each other. Some or all of the data stores 140 may be of different types from each other.

In some examples, such as is shown in FIG. 1, the data store 140 is external to the decisioning server 130. However, in other examples, the data store 140 is internal (or "local") to the decisioning server 130. Where the system comprises multiple data stores 140, the data stores 140 may comprise a mix of internal and external data stores. Retrieving data from multiple data stores 140 may increase data privacy, data security, resiliency and latency risks, for example. The resources involved in retrieving data from an external data store 140 may be greater than the resources involved in retrieving data from an internal data store 140.

The first to fifth networks 106, 110, 122, 126, 136 may take various different forms. Some or all of the first to fifth networks 106, 110, 122, 126, 136 may take the same form as each other. Some or all of the first to fifth networks 106, 110, 122, 126, 136 may take different forms from each other.

In some examples, one or more of the first to fifth networks 106, 110, 122, 126, 136 comprises a public network. An example of such a public network is the Internet.

In some examples, one or more of the first to fifth networks 106, 110, 122, 126, 136 comprises a private network. An example of such a public network is a local area network (LAN).

Although, in the example system 100, networks and multiple communicative couplings are provided between the various system entities (the user devices 102, 104, servers 114, 118, 130 and data store 140), some or all of the networks may be replaced by direct couplings in other examples.

The first to tenth communicative couplings 108, 112, 124, 128, 132, 134, 138, 142 may take various different forms. Some or all of the first to tenth communicative couplings 108, 112, 124, 128, 132, 134, 138, 142 may take the same form as each other. Some or all of the first to tenth communicative couplings 108, 112, 124, 128, 132, 134, 138, 142 may take different forms from each other.

In some examples, one or more of the first to tenth communicative couplings 108, 112, 124, 128, 132, 134, 138, 142 comprises a wireless coupling. An example of such a wireless coupling is a Wi-Fi™ coupling.

In some examples, one or more of the first to tenth communicative couplings 108, 112, 124, 128, 132, 134, 138, 142 comprises a wired coupling. An example of such a wired coupling is an Ethernet cable.

In a specific example, the system 100 may be used to make decisions in relation to telephony requests. For example, the originating user device 102 may transmit a telephone call setup request to the originating server 114. The originating server 114 may then forward the telephone call setup request to the decisioning server 130. The decisioning server 130 may decide that the telephone call setup request is legitimate and forward the telephone call setup request to the destination user device 104 via the destination server 118 accordingly. Alternatively, the decisioning server 130 may decide that the telephone call setup request is not legitimate and may refuse the telephone call setup request accordingly.

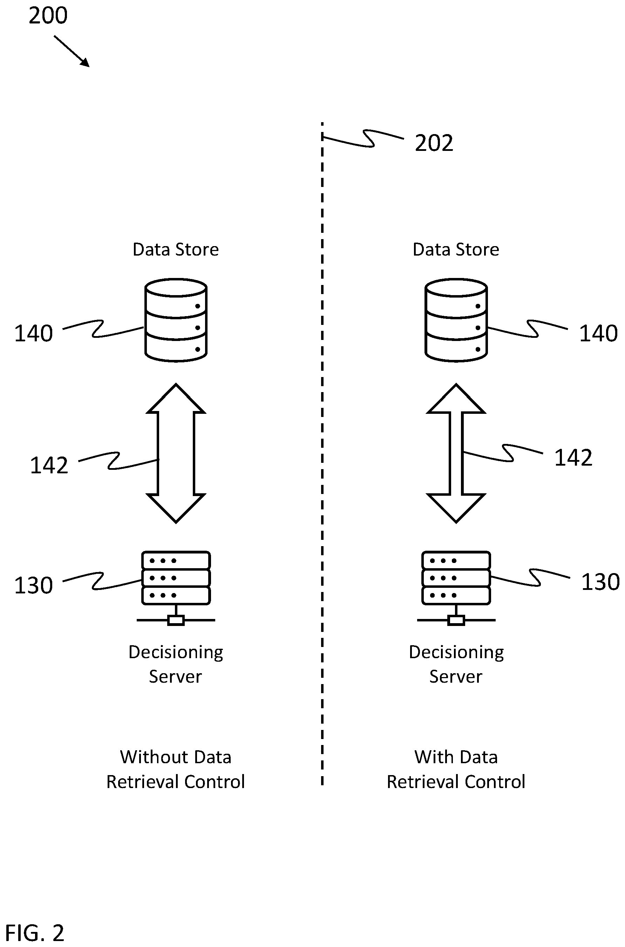

Referring to FIG. 2, there is shown a part 200 of the example system 100 described above with reference to FIG. 1.

FIG. 2 shows, schematically, how the amount of data communicated between the decisioning server 130 and the data store 140 via the tenth communicative coupling 142 varies with and without the data retrieval control measures described herein.

As shown schematically by the width of the representation of the tenth communicative coupling 142 in FIG. 2, the amount of data communicated between the decisioning server 130 and the data store 140 is greater without the data retrieval control measures (to the left of the broken line 202 in FIG. 2) than with the data retrieval control measures (to the right of the broken line 202 in FIG. 2).

As such, the data retrieval control measures described herein can control, i.e. reduce, the amount of data communicated between the decisioning server 130 and the data store 140.

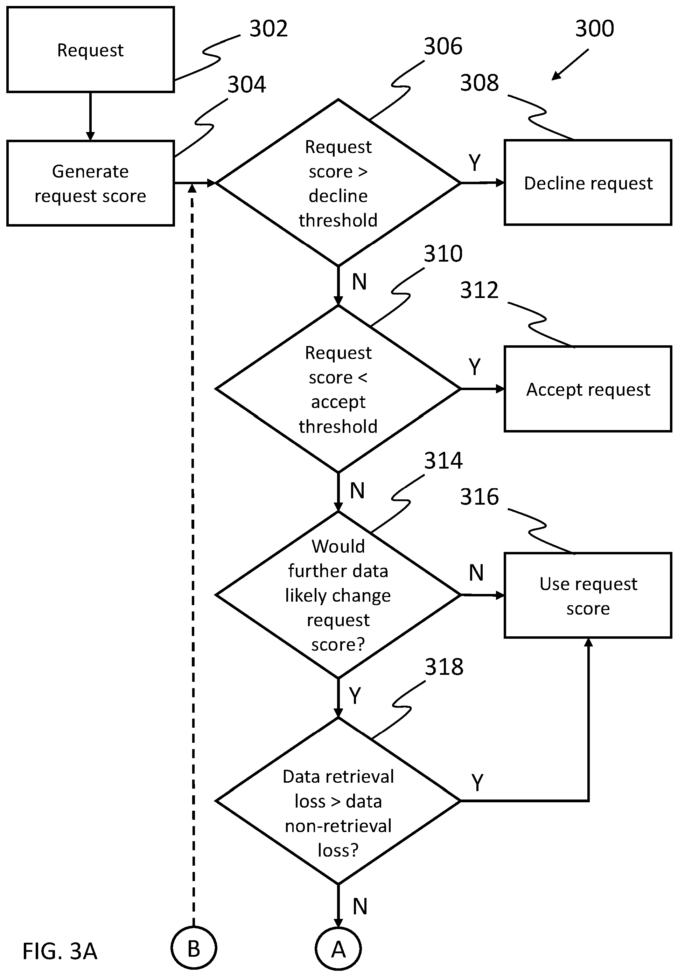

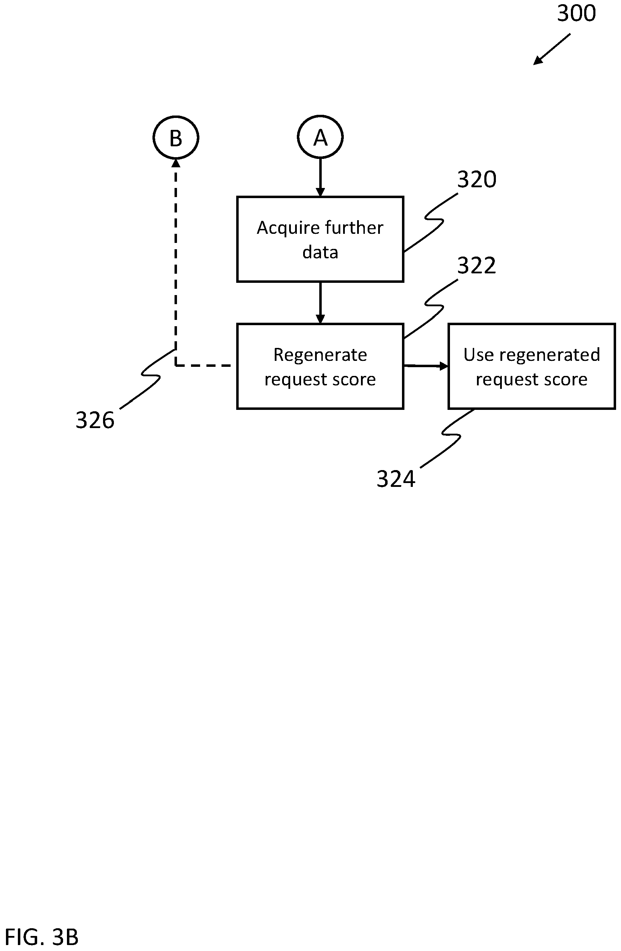

Referring to FIGs. 3A and 3B, there is shown an example data retrieval control method 300.

In this example, the data retrieval control method 300 is performed by the decisioning server 130. However, one or more of the actions shown in FIGs. 3A and 3B may be performed at one or more other entities in other examples.

At item 302, the decisioning server 130 receives a request. The request may be received in various different ways. For example, the request may be received over a communicative coupling, such as the fifth communicative coupling 132 described above.

The decisioning server 130 may have received the request from the originating user device 102 via the originating server 114, or otherwise. In particular, the originating server 114 may have transmitted the request to the decisioning server 130 to be subject to request-related decisioning.

Various different types of request trigger may have caused the request to be received by the decisioning server 130. For example, user interaction with the originating user device 102 may have triggered the request. Alternatively, an automated process on the originating user device 102 may have triggered the request, for example if the originating user device 102 is compromised and being used as part of an attack or other non-legitimate (or "malicious") activity.

At item 304, the decisioning server 130 generates a request-based variable associated with the request. The request-based variable may be referred to as a "primary" request-based variable.

The term "variable" is used herein to mean anything that can change. A variable may, for example, comprise a value, number, amount, or otherwise. As used herein, a variable may comprise one or more variable components, i.e. components of the variable. For example, a variable, $v$, may comprise variable components $v_1$, $v_2$, ....

The term "request-based variable" is used herein to mean a variable that is generated using data associated with a request. Such generation may comprise derivation, calculation, look-up, or otherwise. The data associated with the request may include data comprised in the request and/or data not comprised in, but otherwise associated with, the request.

Examples of request-based variables include, but are not limited to scores, instructions, predictions and confidence levels. For example, a request-based variable may comprise a score component and a confidence level component. The confidence level component may indicate a level of confidence in the score component.

The term "score" is used herein in a general sense to mean an evaluative measure.

The term "request score" is used herein to mean a score that is generated using data associated with a request.

Generating the request-based variable comprises using data associated with the request as input to a request-based variable generation model, i.e. a model that generates a request-based variable.

The term "model" is used herein generally to encompass both machine leaning (ML) models and rule-based models. The request-based variable generation model may map one or more inputs to one or more outputs, with the one or more outputs comprising the request-based variable.

The data associated with the request may comprise request data comprised in the request and/or other data not comprised in, but otherwise associated with, the request. In particular, it may be possible to generate the request-based variable without using any request data comprised in the request. For example, the request-based variable may be generated based on a time of receipt of the request, a communication channel on which the request is received (e.g. where the decisioning server 130 can receive requests via multiple communication channels), etc. The time of receipt of the request and the communication channel on which the request is received may be stored in data that is not comprised in, but is otherwise associated with, the request.

For convenience and brevity, in specific examples described below, the request-based variable comprises a request score. However, as explained above, the request-based variable may comprise one or more additional request-based variable components and/or one or more alternative request-based variable components in other examples. As such, examples herein concerning request scores should be understood to be applicable to other types of request-based variable unless the context requires otherwise. For example, references below to a "request score generation model" should be understood to encompass another type of request-based variable generation model, for example where a request-based variable other than a request score is being generated.

A request score may comprise a numerical value. Where the request score comprises a numerical value, the request score may be in the range from 0 to 1. However, the request score may be in a different numerical range in other examples.

A low request score within the relevant numerical range (e.g. a score of 0.1 in a range from 0 to 1) may correspond to a low level of risk and a high level of legitimacy. A high request score within the relevant numerical range (e.g. a score of 0.9 in a range from 0 to 1) may correspond to a high level of risk and a low level of legitimacy.

However, the request score may take another form in other examples. For example, the request score may comprise a letter from a predetermined set of letters, such as "A", "B", "C", and "D". The request score may comprise a label from a predetermined set of labels, such as "legitimate", "non-legitimate" and "uncertain".

In this example, the decisioning server 130 generates the request score by calculating the request score. However, the decisioning server 130 may generate the request score in another manner in other examples. For example, the decisioning server 130 may look up the request score. For example, the decisioning server 130 may look up the request score in a table based on request data comprised in the request without performing calculations. In this regard, references herein to calculating the request score also apply to other techniques to generate the request score unless the context requires otherwise.

At item 306, the decisioning server 130 compares the request score to a decline threshold. The term "decline threshold" is used herein to mean a threshold against which the request score can be compared and which indicates whether or not the request is to be declined. If the request score is greater than the decline threshold then, at item 308, the request is declined. The request score being greater than the decline threshold means, in this example, that the request is high-risk, low-legitimacy and should therefore be declined.

If, at item 306, the request score is not greater than the decline threshold then, at item 310, the decisioning server 130 compares the request score to an accept threshold. The term "accept threshold" is used herein to mean a threshold against which the request score can be compared and which indicates whether or not the request is to be accepted.

If the request score is less than the accept threshold then, at item 312, the request is accepted. The request score being less than the accept threshold means, in this example, that the request is low-risk, high-legitimacy and should therefore be accepted.

If, at item 310, the request score is not less than the accept threshold then, at item 314, the decisioning server 130 determines whether further data may change the request score.

The term "further data" is used herein to mean any data that can be used in generating a request score. For example, the further data may be useable to regenerate the primary request score.

The term "may" as used in the context of determining whether further data may change the request score, indicates that the further data might result in the request score changing but not that the request score will necessarily change. This is because the request score is only regenerated when the further data has actually been retrieved.

The decisioning server 130 may perform the determination of item 314 in various different ways.

For example, the decisioning server 130 may identify, for a certain type of request, that legitimate requests from a given originating entity should use a source Internet Protocol (IP) address that has been used in previous requests from that given originating entity. When such types of request are received, retrieving historic IP address usage information (listing previously used IP addresses for that given originating entity) can therefore influence the request score. However, historic IP address usage information may not be relevant to other types of request and/or other types of further data may not influence request scores for all types of request.

If the decisioning server 130 determines that the further data would not likely change the request score then, at item 316, the request score is used as a determinative request score. The term "determinative request score" is used herein to mean the request score that is used to determine what decision to make in connection with the request, for example to accept or decline the request.

At item 316, the request score is not above the decline threshold (see item 306) and is not below the accept threshold (see item 310), and so the request score does not indicate whether the request is (likely) legitimate or non-legitimate. One or more predetermined actions may be taken in such situations. For example, the request may be subject to analyst review.

If the decisioning server 130 determines that the further data would likely change the request score then, at item 318, the decisioning server 130 determines whether a data retrieval loss associated with retrieving the further data would outweigh a data non-retrieval loss associated with not retrieving the further data.

The term "data retrieval loss" is used herein to mean a loss associated with retrieving (further) data. The term "data non-retrieval loss" is used herein to mean a loss associated with not retrieving (further) data.

The term "loss" is used herein to mean something undesirable, unwanted or negative, for example in contrast to a desirable, wanted or positive gain.

The term "outweigh" is used herein to mean more significant than. A number may be considered to outweigh another number if it is greater than the other number. However, in some implementations, a lower number could be indicative of a greater significance of what the number represents.

The decisioning server 130 may perform the determination of item 318 in various different ways.

For example, a data retrieval loss indicator, $I_1$, may be defined as $I_1 = \sum_{i=1}^{n} P_i$, where $P_i$ is one of n parameters used to derive the data retrieval loss indicator, $I_1$.

Examples of such parameters include, but are not limited to, a data privacy parameter, a data security parameter, a resiliency parameter, a latency parameter, an inaccurate decision consequence parameter, a request attribute parameter, an uncertainty parameter, and a request-score-change parameter.

Similarly, a data non-retrieval loss indicator, $I_2$, may be defined as $I_2 = \sum_{j=1}^{m} Q_j$, where $Q_j$ is one of m

parameters used to derive the data non-retrieval loss indicator, $I_2$. Examples of such parameters include, but are not limited to, a data privacy parameter, a data security parameter, a resiliency parameter, a latency parameter, an inaccurate decision consequence parameter, a request attribute parameter, an uncertainty parameter, and a request-score-change parameter.

In a specific example, each of the above-mentioned parameters $P_i$ and $Q_j$ may take a value, for example in a range from 0 to 1. The data retrieval loss indicator, $I_1$, and the data non-retrieval loss indicator, $I_2$, may then be the sum of their respective parameter values.

The values of the parameters $P_i$ and $Q_j$ may be set by an operator of the system and/or may be derived in another manner. For example, a latency value may be observed and/or measured.

An inaccurate decision consequence parameter may indicate a measure of loss as a consequence of incorrectly classifying the request. This parameter may, in effect, weight in favour of retrieval or non-retrieval of the further data, for example based on whether the further data is likely to increase accuracy and the magnitude of the consequence.

A request attribute parameter may indicate a measure of loss based on an attribute of the request. For example, a loss may be more significant for certain types of request, user, originating user device, etc. If, for example, retrieving certain further data for a certain type of request has historically increased accuracy of decision for that type of request, the request attribute parameter may be weighted in favour of retrieval. On the other hand, if retrieving that same further data (and/or other further data) for another type of request has historically resulted in negligible changes in accuracy, the request attribute parameter may be weighted in favour of non-retrieval.

An uncertainty parameter may indicate a measure of uncertainty associated with the generated request score of item 304. For example, an IP address comprised in a request may have reduced the confidence (and so increased the uncertainty) of the generated request score by either a large amount or by a small amount. In such a situation, the uncertainty parameter may be weighted towards retrieval in the expectation that it may increase confidence.

A request-score-change parameter may indicate a measure of likeliness of further data changing the generated request score. In one specific example, a request-score-change parameter may indicate a likelihood of the further data comprising IP address history information. In another specific example, a request-score-change parameter may indicate an accuracy of the further data. For example, data from certain countries may have relatively low accuracies. The request-score-change parameter may be derived as a result of item 314, or otherwise.

The data retrieval loss indicator, $I_1$, and the data non-retrieval loss indicator, $I_2$, may then be compared to each other to determine whether or not the data retrieval loss would outweigh the data non-retrieval loss.

By way of a specific numerical example, the (potential) data privacy loss in not retrieving further data may be high, for example 0.8 (in the range from 0 to 1). For example, if a non-legitimate login request is incorrectly classified as a legitimate login request, a malicious actor might be able to access account data.

The (potential) data privacy loss in retrieving the further data may, however, be low, for example 0.2 (in the range from 0 to 1). For example, data retrieval may be subject to authentication, encryption and/or other data security measures such that communicated data is highly secure.

However, the (potential) latency loss in retrieving the further data may be very high, for example 0.9 (in the range from 0 to 1) and the (potential) latency loss in not retrieving the further data may be zero, for example 0 (in the range from 0 to 1). The latency loss in retrieving the further data may be high for various reasons. For example, there may be a significant amount of further data to retrieve, the further data retrieval connection may have a low bandwidth, the further data may be stored across multiple data stores, and so on.

The data retrieval loss indicator, $I_1$, may be calculated as $I_1 = 0.2 + 0.9 = 1.1$ and the data non-retrieval loss indicator, $I_2$, may be calculated as $I_2 = 0.8 + 0 = 0.8$.

Since $I_1 = 1.1 > 0.8 = I_2$, the determination may be that the data retrieval loss would outweigh the data non-retrieval loss, even though there is potentially a significant data privacy loss in not retrieving the further data.

The above-mentioned parameters may be weighted and/or different parameter ranges may be used for the different parameters. For example, the data retrieval loss indicator, $I_1$, may be defined as

$$I_1 = \sum_{i=1}^{n} \alpha_i \cdot P_i$$

, where $a_i$ is a parameter weight. The parameter weight, $\alpha_i$, may be a numerical value in the range from 0 to 1 for example. The data non-retrieval loss indicator, $I_2$, may be defined accordingly.

Different weights may be used in different scenarios. For example, in some scenarios such as voice communication applications, latency may be heavily weighted. In some scenarios such as where personal data of an individual is involved, data privacy may be heavily weighted.

In the above specific numerical example, the same parameters are used for both the retrieval loss indicator, $I_1$, and the data non-retrieval loss indicator, $I_2$. However, different parameters may be used in other examples.

For example, the data non-retrieval loss indicator, $I_2$, may be based on a downstream server operating load parameter. The downstream server operating parameter may be indicative of an operating load of the downstream server.

In the above specific numerical example, multiple parameters are used for both the retrieval loss indicator, $I_1$, and the data non-retrieval loss indicator, $I_2$. However, one or both may use a single parameter in other examples.

Additionally, in this specific example, the retrieval loss indicator, $I_1$, and the data non-retrieval loss indicator, $I_2$, are calculated based on respective parameters $P_i$ and $Q_j$.

In other examples, one of the retrieval loss indicator, $I_1$, and the data non-retrieval loss indicator, $I_2$, is a predetermined threshold value. For example, in the above specific numerical example, the data retrieval loss indicator, $I_1$, may be defined as $I_1 = \sum_{i=1}^{n} P_i$, and the data non-retrieval loss indicator, $I_2$, may be a predetermined threshold value, for example 0.7. In such other examples, the data retrieval loss indicator, $I_1$, may still be calculated as 1.1, but would be compared to the threshold value of 0.7 rather than being compared to the calculated value of 0.8. A predetermined threshold value may be static or may be dynamic. In this specific example, the data non-retrieval loss indicator, $I_2$, is still indicative of a loss associated with not retrieving the further data even though it is a predetermined threshold value. In particular, the predetermined threshold value is indicative of a value at which the loss associated with not retrieving the further data matches the loss associated with retrieving the further data.

In other examples, both the retrieval loss indicator, $I_1$, and the data non-retrieval loss indicator, $I_2$, are compared to one or more predetermined threshold values. Such a comparison involves both the retrieval loss indicator, $I_1$, and the data non-retrieval loss indicator, $I_2$, in addition to the one or more predetermined threshold values.

In another example, the data retrieval loss indicator, $I_1$, may be defined as $I_1 = \max\{P_i\}$, the data non-retrieval loss indicator, $I_2$, may be defined as $I_2 = \max\{Q_j\}$, and $I_1$ may be compared to $I_2$ in a similar manner to that described above.

Although, in examples described above, the retrieval loss indicator, $I_1$, and the data non-retrieval loss indicator, $I_2$, are numerical values, they may take different forms in other examples. For example, they may be "high", "medium" and "low". A ranking rule may be configured such that "high" outweighs "medium" and "low", and "medium" outweighs "low".

If the decisioning server 130 determines that the data retrieval loss would outweigh the data non-retrieval loss, then the method proceeds to item 316, where the request score is used as the determinative request score.

If the decisioning server 130 determines that the data retrieval loss would not outweigh the data non-retrieval loss then, at item 320, the decisioning server 130 retrieves the further data.

In a specific example, the decisioning server 130 may identify that an originating entity is using a different originating user device from their usual originating user device. For example, the originating entity may be using a user device of a family member. The decisioning server 130 may, accordingly, perform a device check. This may, for example, involve sending a one-time password (OTP) to a known user device of the originating entity and prompting the originating entity to enter the OTP into the new user device. The result of the device check may correspond to the further data used to regenerate the request score.

Processing then proceeds to item 322, where the decisioning server 130 regenerates the request score. Such regeneration uses at least some of the further data. The regeneration will likely result in a different request score compared to the primary request score. However, in some situations, the regenerated risk score is the same as the primary request score, for example where the further data does not, in fact, change the request score.

As explained above, the decisioning server 130 may not, at item 320, retrieve all data that could be used to regenerate the request score. For example, if there were additional data that could be used to regenerate the request score, but which would not, or would not be likely to, change the request score, such additional data may not be retrieved.

This can optimise the amount of data transferred in the system 100, since data that is not likely to change the request score and, ultimately, the eventual decision is not communicated.

In the context of facial recognition, the decisioning server 130 may be able to identify that certain pixels and/or regions of an image (e.g. in the centre of the image) are most influential on the request score. The decisioning server 130 may retrieve reference image data for only those pixels and/or regions and not retrieve reference image data for other pixels and/or regions (e.g. at the edge of the image).

Processing then proceeds to item 324, where the decisioning server 130 uses the regenerated request score as the determinative request score.

Some or all of the actions shown in FIGs. 3A and 3B may be omitted, varied or replaced in other examples.

Actions may take place in a different order from the order shown in FIGs. 3A and 3B. For example, item 314 could be performed prior to item 306. This may be particularly effective where the further data could change a primary request score that is above the decline threshold or below the accept threshold.

Actions shown in FIGs. 3A and 3B may be divided or combined.

One or more actions shown in FIGs. 3A and 3B may be performed again as part of a recursive procedure. For example, as indicated by item 326, instead of being used as the determinative request score (at item 324), the regenerated request score of item 322 may be compared to the decline threshold at item 306. If the regenerated request score is not above the decline threshold, the regenerated request score may be compared to the accept threshold at item 310. If the regenerated request score is not below the accept threshold, then items 314, 316, 318, 320, 322, 324 and 326 may be repeated as appropriate.

The recursive procedure may be performed one or multiple times.

The recursive procedure may be repeated until a predetermined condition is met. An example of such a predetermined condition is the recursive procedure having been performed a predetermined number of times. Another example of such a predetermined condition is the regenerated request score exceeding the decline threshold or being below the accept threshold.

In this connection, it should be understood that references to generating a request score, for example as is performed at item 304, encompass both generating a primary request score (i.e. a request score that is not a regenerated request score) and generating a regenerated request score. In addition, it should be understood that a regenerated request score may result from a single request score regeneration procedure, or from multiple recursions of a request score regeneration procedure.

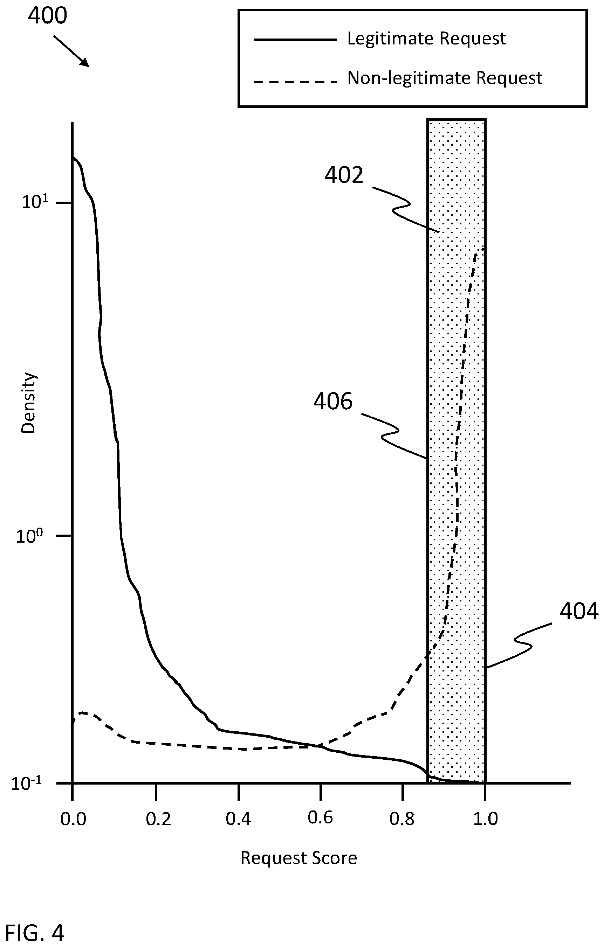

Referring to FIG. 4, there is shown an example graph 400 of request score versus density.

FIG. 4 shows example request score versus density for legitimate requests (solid line) and for non-legitimate requests (broken line).

FIG. 4 also shows a request score region 402 in which all requests are decisioned as non-legitimate requests.

In this example, the upper request score value 404 of the request score region 402 is 1.00.

In this example, the lower request score value 406 of the request score region 402 is around 0.85. The lower request score value 406 may correspond to the decline threshold described above.

Although most of the requests with request scores in the request score region 402 are non-legitimate requests (broken line), a small number of legitimate requests (solid line) with request scores in the request score region 402 have incorrectly been decisioned as non-legitimate. The latter represent a small number of false positives.

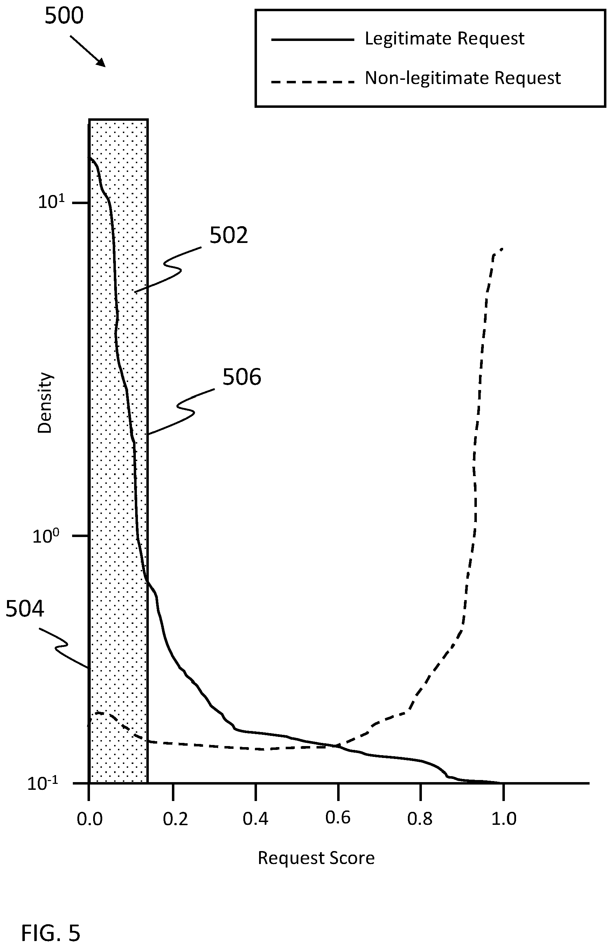

Referring to FIG. 5, there is shown an example graph 500 of request score versus density. The example graph 500 corresponds generally to the example graph 400.

However, FIG. 5 shows a request score region 502 in which all requests are decisioned as legitimate requests.

In this example, the lower request score value 504 of the request score region 502 is 0.00.

In this example, the upper request score value 506 of the request score region 502 is around 0.15. The upper request score value 506 may correspond to the accept threshold described above.

Although most of the requests with request scores in the request score region 502 are legitimate requests (solid line), a small number of non-legitimate requests (broken line) with request scores in the request score region 502 have incorrectly been decisioned as legitimate.

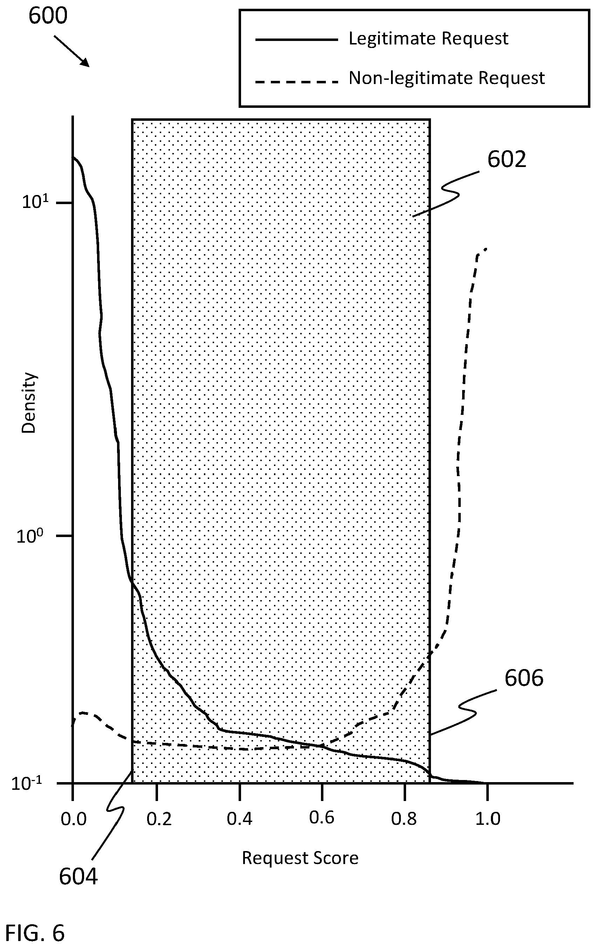

Referring to FIG. 6, there is shown an example graph 600 of request score versus density.

The example graph 600 corresponds generally to the example graphs 400, 500.

However, FIG. 6 shows a request score region 602 with roughly similar densities of legitimate and non-legitimate requests across the request score region 602.

In this example, the lower request score value 604 of the request score region 602 is around 0.15 and corresponds to the upper value 506 of the request score region 502 shown in FIG. 5.

In this example, the upper request score value 606 of the request score region 602 is around 0.85 and corresponds to the lower value 406 of the request score region 402 shown in FIG. 4.

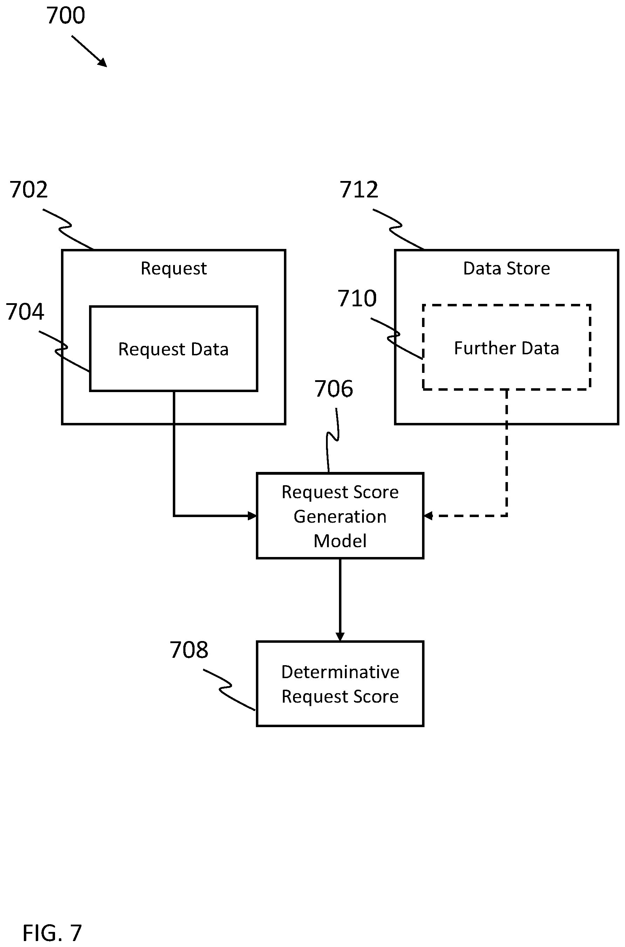

Referring to FIG. 7, there is shown schematically a representation of a data retrieval control procedure 700.

In this example, a request 702 is received. The request 702 comprises request data 704. A request score generation model 706 calculates a determinative request score 708 based on the request data 704 comprised in the request 702.

In some examples, and as indicated by the use of broken lines, the request score generation model 706 also uses further data 710 to calculate the determinative request score 708. When used, the further data 710 is retrieved from a data store 712. The data store 712 may correspond to the data store 140 described above.

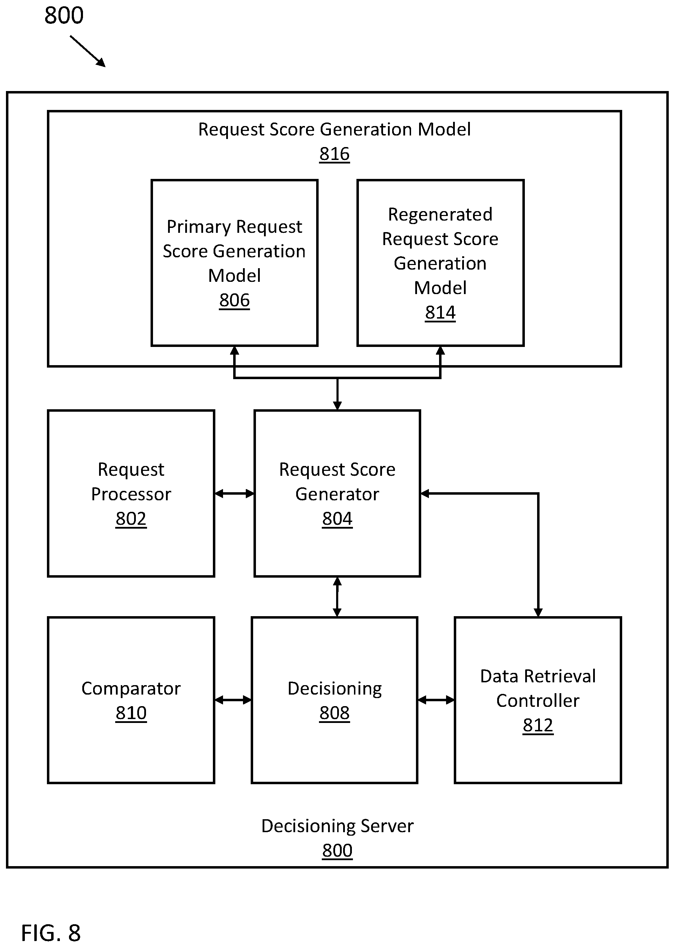

Referring to FIG. 8, there is shown schematically a representation of a decisioning server 800.

The decisioning server 800 may correspond to the decisioning server 130 described above.

The decisioning server 800 is depicted as comprising various components. These should be understood to be logical components. Functionality of multiple components may be combined together. Some components shown in FIG. 8 may be omitted, replaced or divided into smaller components in other examples. The components may be implemented in hardware and/or software.

In this example, the decisioning server 800 comprises a request processor 802. In this example, the request processor 802 receives and processes requests. In this example, processing a request comprises extracting request data from the request.

In this example, the decisioning server 800 comprises a request score generator 804.

In this example, the request processor 802 provides extracted request data to the request score generator 804.

In this example, the request score generator 804 uses the extracted request data as input to a primary request score generation model 806.

In this example, the primary request score generation model 806 outputs a primary request score.

In this example, the request score generator 804 provides the primary request score to a decisioning component 808.

In this example, the decisioning component 808 uses a comparator 810 to compare the primary request score to one or more threshold scores.

The decisioning component 808 may use the primary request score as the determinative request score.

However, the decisioning component 808 may instead use a data retrieval controller 812 to retrieve further data.

The data retrieval controller 812 may provide the further data to the request score generator 804 directly and/or via the decisioning component 808 to regenerate the request score.

The request score generator 804 uses a request score regeneration model 814 to regenerate the request score.

Although the primary request score generation model 806 and the regenerated request score generation model 814 are depicted as separate components of the decisioning server 800, this separation should be understood to be logical.

In some examples, the primary request score generation model 806 is the same as the regenerated request score generation model 814.

In other examples, the primary request score generation model 806 is different from the regenerated request score generation model 814. For example, the regenerated request score generation model 814 may be able to process the further data as an input whereas the primary request score generation model 806 may not be able to process the further data as an input.

More generally, the request score generator 804 may use a request score generation model 816 to generate and/or regenerate a request score. The request score generator 804 may comprise a primary request score generation model 806 logical component and a regenerated request score generation model 814 logical component. The primary request score generation model 806 and the regenerated request score generation model 814 may be the same model as each other or may be different models.

The regenerated request score is then used as the determinative request score.

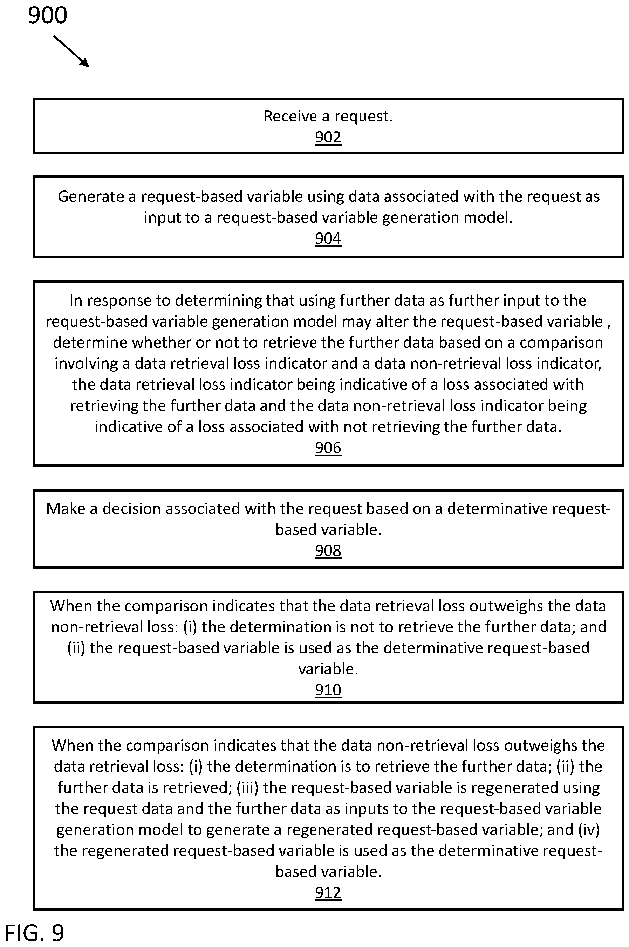

Referring to FIG. 9, there is shown a representation of an example data retrieval control method 900.

At item 902, a request is received.

At item 904, a request-based variable is generated using data associated with the request as input to a request-based variable generation model.

The request-based variable may comprise a request score, an instruction, a predication and/or a risk score. A risk score is indicative of a level of risk associated with the request. However, the request score may comprise another type of request score, such as a priority score. For example, in times of high server load, high priority requests may be accepted, low priority requests may be rejected, and intermediate priority requests may be subject to further analysis, e.g. priority classification, to determine whether they should be accepted or rejected.

The request-based variable generation model may comprise an ML model. An ML model can be trained using training data. However, the request-based variable generation model may be a rule-based model that does not use ML.

Generating the request-based variable may comprise using request data comprised in the request. However, as explained above, the request-based variable may be generated in other ways, for example by looking up the request-based variable.

At item 906, in response to determining that using further data as further input to the request-based variable generation model may alter (or "change") the request-based variable, it is determined whether or not to retrieve the further data based on a comparison involving a data retrieval loss indicator and/or a data non-retrieval loss indicator.

In examples, the data associated with the request is initially used as the input to the request-based variable generation model to generate a primary request-based variable. Subsequently, both the further data and the data associated with the request are used as inputs to the request-based variable generation model to generate a regenerated request-based variable.

The comparison involving the data retrieval loss indicator and the data non-retrieval loss indicator may, for example, comprise determining whether the data retrieval loss indicator is greater than, less than, or the same as the data non-retrieval loss indicator. In such examples, the data retrieval loss indicator and the data non-retrieval loss indicator are compared to each other. However, the data retrieval loss indicator and the data non-retrieval loss indicator may be compared to one or more other indicators, such as predetermined threshold values, in other examples.

The data retrieval loss indicator may be indicative of a loss associated with retrieving the further data and/or the data non-retrieval loss indicator may be indicative of a loss associated with not retrieving the further data.

The data retrieval loss indicator and/or the data non-retrieval loss indicator may be based on a data privacy parameter, a data security parameter, a resiliency parameter and/or a latency parameter. However, other parameters may be used, for example depending on the application.

Retrieval of the further data may comprise retrieving the further data from local storage, retrieving the further data from external storage, and/or requesting and receiving the further data from an originating entity, where the originating entity originated the request. However, the further data may be retrieved in another manner in other examples.

At item 908, a decision associated with the request is made based on a determinative request-based variable.

At item 910, when the comparison indicates that the data retrieval loss outweighs the data non-retrieval loss, the determination is not to retrieve the further data, and the request-based variable is used as the determinative request-based variable.

At item 912, when the comparison indicates that the data non-retrieval loss outweighs the data retrieval loss, the determination is to retrieve the further data, the further data is retrieved, the request-based variable is regenerated using the request data and the further data as inputs to the request-based variable generation model to generate a regenerated request-based variable, and the regenerated request-based variable is used as the determinative request-based variable.

The method 900 may be performed on a request-by-request basis. However, the method could be performed for groups of requests, for example for groups of two or more requests, in other examples. Requests may be grouped together based on content similarity, time of receipt, or otherwise.

The method 900 may be performed in an anomalous behaviour detection system. However, the method may be performed in other types of systems, i.e. systems that do not detect anomalous behaviour.

The further data may be retrieved for one of (i) the request and (ii) a subsequent request, and the further data may not be retrieved for the other of (i) the request and (ii) the subsequent request. As such, further data may be retrieved for some but not all requests. In some situations, for example where both the request and the subsequent request are neither clearly legitimate nor clearly non-legitimate, the further data may be retrieved for both the request and the subsequent request. In other situations, for example where both the request and the subsequent request are clearly legitimate or clearly non-legitimate, the further data may be retrieved for neither the request nor the subsequent request.

In some examples, when the request-based variable and/or the regenerated request-based variable is indicative of the request being high-risk, the decision of item 908 comprises performing an action associated with a high-risk request. A high-risk request may be a request having a request score above (or below, depending on implementation) a threshold, such as the above-described decline threshold.

The action associated with the high-risk request may comprise refusing the request. Refusing the request may or may not involve communicating the refusal to a requestor. However, another possible action associated with the high-risk request is to process the request, but as a high-risk request.

In some examples, when the request-based variable and/or the regenerated request-based variable is indicative of the request being low-risk, the decision of item 908 comprises performing an action associated with a low-risk request. A low-risk request may be a request having a request score below (or above, depending on implementation) a threshold, such as the above-described accept threshold.

The action associated with the low-risk request may comprise accepting the request. Accepting the request may or may not involve communicating the acceptance to a requestor. However, a different action associated with the low-risk request may be performed in other examples. For example, the request may be forwarded to another entity for processing without a decision being made on whether the request should ultimately be accepted or declined.

In some examples, when the request-based variable and/or the regenerated request-based variable is indicative of the request being medium-risk, an action associated with a medium-risk request is performed. A medium-risk request may be a request having a request score between two thresholds, such as the above-described decline and accept thresholds.

The action associated with the medium-risk request may comprise determining whether using the further data as further input to the request-based variable generation model may alter the request-based variable. In response to determining that retrieving the further data would not alter the request-based variable, the request-based variable may be used as the determinative request-based variable.

In some examples, in response to determining that using additional data as additional input to the request-based variable generation model would not alter the request-based variable, the additional data is not retrieved. As such, data can selectively be retrieved which influences the request-based variable.

Measures (such as systems, servers, computer programs) described herein may implement the method 900.

In particular, a system configured to perform the method 900 may be provided.

A decisioning server configured to perform the method 900 may be provided.

A computer program comprising instructions which, when executed by a processor, cause the processor to perform the method 900 may be provided.

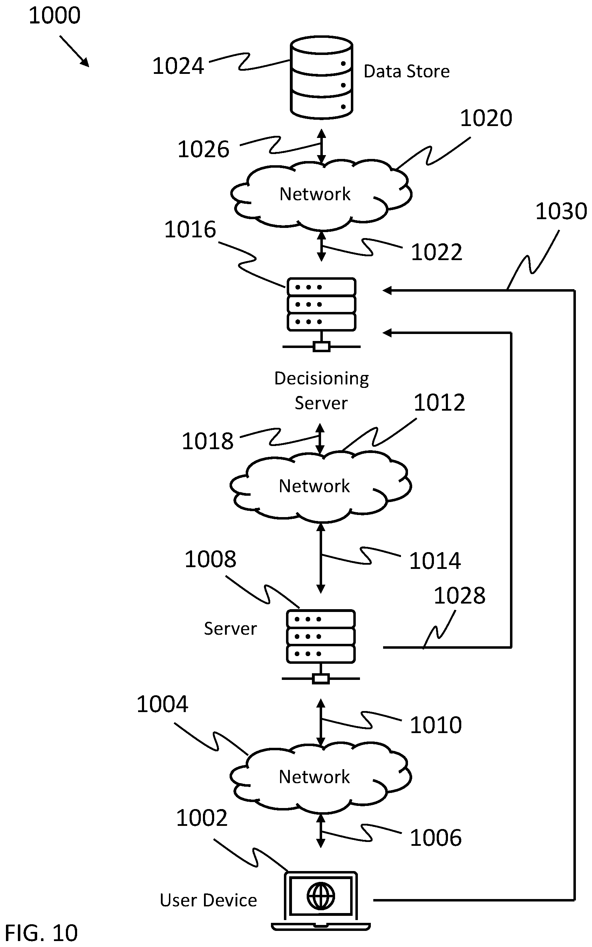

Referring to FIG. 10, there is shown another example system 1000.

The example system 1000 has many features in common with the example system 100 as will now be explained.

The example system 1000 comprises a user device 1002, which may correspond to the first and/or second user device 102, 104. The user device 1002 is communicatively coupled to a first network 1004 via a first communicative coupling 1006. The first network 1004 may correspond to the first and/or second network 106, 110. The first communicative coupling 1006 may correspond to the first and/or second communicative coupling 108, 112.

The example system 1000 comprises a server 1008, which may correspond to the first and/or second server 114, 118. The server 1008 is communicatively coupled to the first network 1004 via a second communicative coupling 1010. The second communicative coupling 1010 may correspond to the third and/or fourth communicative coupling 116, 120.

The server 1008 is communicatively coupled to a second network 1012 via a third communicative coupling 1014. The second network 1012 may correspond to the third and/or fourth network 122, 126. The third communicative coupling 1014 may correspond to the fifth and/or sixth communicative coupling 124, 128.

The example system 1000 comprises a decisioning server 1016, which may correspond to the decisioning server 130. The decisioning server 1016 is communicatively coupled to the second network 1012 via a fourth communicative coupling 1018. The fourth communicative coupling 1018 may correspond to the seventh and/or eighth communicative coupling 132, 134.

The decisioning server 1016 is communicatively coupled to a third network 1020 via a fifth communicative coupling 1022. The third network 1020 may correspond to the fifth network 136 and the fifth communicative coupling 1022 may correspond to the ninth communicative coupling 138.

The example system 1000 comprises a data store 1024, which may correspond to the data store 140. The data store 1024 is communicatively coupled to the third network 1020 via a sixth communicative coupling 1026. The sixth communicative coupling 1026 may correspond to the tenth communicative coupling 142.

As indicated by item 1028, the server 1008 may communicate a request to the decisioning server 1016. The decisioning server 1016 may perform data retrieval control as described herein in response to the request from the decisioning server 1016.

As indicated by item 1030, the user device 1002 may communicate a request to the decisioning server 1016. The decisioning server 1016 may perform data retrieval control as described herein in response to the request from the user device 1002.

In some examples, the user device 1002 communicates such a request to the decisioning server 1016 via the server 1008. In other examples, the user device 1002 may be able to communicate such a request to the decisioning server 1016 directly, i.e. without the request passing via the server 1008. For example, the system 1000 may not include the server 1008 in some deployments and the user device 1002 may be able to communicate directly with the decisioning server 1016.

Various decisioning request triggers may prompt the communication of the request to the decisioning server 1016. An example of such a decisioning request trigger is receiving another request in relation to which a decision is to be made.

With reference to an earlier specific example, the system 1000 may be used to make decisions in relation to telephony requests. For example, the server 1008 may correspond to the destination server 118 and the user device 1002 may correspond to the destination user device 104. The server 1008 may receive an incoming telephone call setup request destined for the user device 1002. The server 1008 may invoke the decisioning server 1016, as indicated by item 1028, to decide whether or not the incoming telephone call setup request should be forwarded to the user device 1002. The decisioning server 1016 may be performing data retrieval control in connection with such decisioning. The data retrieval control measures described herein have various applications.

The data retrieval control measures may be applied in connection with DoS and/or DDoS attack management. For example, the data retrieval control may be relatively relaxed when downstream systems are not operating near capacity. However, when an increase in computing resource usage by downstream systems is detected, the data retrieval control may be tightened to protect the downstream system from being overwhelmed by non-legitimate requests.

The data retrieval control measures may be used to provide load management in respect of downstream systems.

Another application is in connection with anomalous behaviour detection. For example, the data retrieval control measures may enable accurate anomalous behaviour detection to be performed, while trading off other considerations such as data privacy.

While specific embodiments of the present invention have been described in detail, it will be appreciated by those skilled in the art that the embodiments described in detail are not limiting on the scope of the claimed invention.

It will also be appreciated that optional features described hereinabove in respect of aspects, embodiments and examples apply equally, where technically appropriate, to other aspects, embodiments and examples. Where technically appropriate, aspects, embodiments and examples may be combined.

Methods described herein may be computer-implemented.

The aspects, embodiments and examples described herein each extend to a non-transitory computer-readable medium comprising instructions that, when executed by a processor, cause the processor to carry out any method described herein.

The aspects, embodiments and examples described herein each further extend to a computer software product comprising instructions that, when executed by a processor, cause the processor to carry out any method described herein.

In the context of this specification "comprising" is to be interpreted as "including".

**Claims**

1.   A data retrieval control method, the method comprising:

receiving a request;
generating a request-based variable using data associated with the request, wherein the data is input to a request-based variable generation model to generate the request-based variable;
in response to determining that using further data as further input to the request-based variable generation model may alter the request-based variable, determining whether or not to retrieve the further data based on a comparison involving a data retrieval loss indicator and a data non-retrieval loss indicator, the data retrieval loss indicator being indicative of a loss associated with retrieving the further data and the data non-retrieval loss indicator being indicative of a loss associated with not retrieving the further data; and
making a decision associated with the request based on a determinative request-based variable,
wherein, when the comparison indicates that the data retrieval loss outweighs the data non-retrieval loss:

the determination is not to retrieve the further data; and
the request-based variable is used as the determinative request-based variable, and

wherein, when the comparison indicates that the data non-retrieval loss outweighs the data retrieval loss:

the determination is to retrieve the further data;
the further data is retrieved;
the request-based variable is regenerated using the request data and the further data as inputs to the request-based variable generation model to generate a regenerated request-based variable; and
the regenerated request-based variable is used as the determinative request-based variable.

2.   A method according to claim 1, wherein the data retrieval loss indicator and/or the data non-retrieval loss indicator is based on a data privacy parameter.

3.   A method according to claim 1 or 2, wherein the data retrieval loss indicator and/or the data non-retrieval loss indicator is based on:

a data security parameter;
a resiliency parameter; and/or
a latency parameter.

4.   A method according to any of claims 1 to 3, wherein the method is performed on a request-by-request basis.

5.   A method according to any of claims 1 to 4, wherein the further data is retrieved for one of the request and a subsequent request, and wherein the further data is not retrieved for the other of the request and the subsequent request.

6.   A method according to any of claims 1 to 5, wherein the request-based variable comprises a request score, an instruction, a predication and/or a risk score.

7.   A method according to any of claims 1 to 6, wherein:

when the request-based variable and/or the regenerated request-based variable is indicative of the request being high-risk, the decision comprises performing an action associated with a high-risk request, optionally wherein the action associated with the high-risk request comprises refusing the request; and/or
wherein, when the request-based variable and/or the regenerated request-based variable is indicative of the request being low-risk, the decision comprises performing an action associated with a low-risk request, optionally wherein the action associated with the low-risk request comprises accepting the request.

8.   A method according to any of claims 1 to 7, wherein, when the request-based variable and/or the regenerated request-based variable is indicative of the request being medium-risk, an action associated with a medium-risk request is performed,

optionally wherein the action associated with the medium-risk request comprises determining whether using the further data as further input to the request-based variable generation model may alter the request-based variable,
further optionally wherein, in response to determining that retrieving the further data would not alter the request-based variable, the request-based variable is used as the determinative request-based variable.

9.   A method according to any of claims 1 to 8, wherein the request-based variable generation model comprises a machine learning model.

10.  A method according to any of claims 1 to 9, wherein retrieval of the further data comprises:

> retrieving the further data from local storage;
> retrieving the further data from external storage; and/or
> requesting and receiving the further data from an originating entity, the originating entity having originated the request.

11. A method according to any of claims 1 to 10, wherein in response to determining that using additional data as additional input to the request-based variable generation model would not alter the request-based variable, the additional data is not retrieved.

12. A method according to any of claims 1 to 11, wherein generating the request-based variable comprises using request data comprised in the request.

13. A method according to any of claims 1 to 12, wherein the method is performed:

> by a decisioning server; and/or
> in an anomalous behaviour detection system.

14. A decisioning server comprising:

> a request processor;
> a request-based variable generator;
> a request-based variable generation model;
> a decisioning component;
> a comparator; and
> a data retrieval controller,
> wherein the decisioning server is configured to perform a method according to any of claims 1 to 13.

15. A system, server and/or computer program configured to perform a method according to any of claims 1 to 13.


**Patentansprüche**

1. Datenabrufsteuerungsverfahren, das Verfahren umfassend:

> Empfangen einer Anforderung;
> Generieren einer anforderungsbasierten Variable unter Verwendung von Daten, die mit der Anforderung verknüpft sind, wobei die Daten in ein anforderungsbasiertes Variablengenerierungsmodell eingegeben werden, um die anforderungsbasierte Variable zu generieren;
> als Reaktion auf das Bestimmen, dass die Verwendung weiterer Daten als weitere Eingabe in das anforderungsbasierte Variablengenerierungsmodell die anforderungsbasierte Variable ändern kann, Bestimmen, ob die weiteren Daten abgerufen werden sollen oder nicht, basierend auf einem Vergleich, der einen Datenabrufverlustindikator und einen Daten-Nichtabrufverlustindikator einbezieht, wobei der Datenabrufverlustindikator einen Verlust, der mit dem Abrufen der weiteren Daten verknüpft ist, anzeigt und der Daten-Nichtabrufverlustindikator einen Verlust, der mit dem Nichtabruf der weiteren Daten verknüpft ist, anzeigt; und
Treffen einer Entscheidung, die mit der Anforderung verknüpft ist, basierend auf einer bestimmenden anforderungsbasierten Variablen, wobei, wenn der Vergleich anzeigt, dass der Datenabrufverlust den Daten-Nichtabrufverlust überwiegt:

> die Bestimmung ist, die weiteren Daten nicht abzurufen; und
> die anforderungsbasierte Variable als die bestimmende anforderungsbasierte Variable verwendet wird, und
> wobei, wenn der Vergleich anzeigt, dass der Daten-Nichtabrufverlust den Datenabrufverlust überwiegt:

>> die Bestimmung ist, die weiteren Daten abzurufen;
>> die weiteren Daten abgerufen werden;
>> die anforderungsbasierte Variable unter Verwendung der Anforderungsdaten und der weiteren Daten als Eingaben in das anforderungsbasierte Variablengenerierungsmodell regeneriert wird, um eine regenerierte anforderungsbasierte Variable zu generieren; und
>> die regenerierte anforderungsbasierte Variable als die bestimmende anforderungsbasierte Variable verwendet wird.

2. Verfahren nach Anspruch 1, wobei der Datenabrufverlustindikator und/oder der von Daten-Nichtabrufverlustindikator auf einem Datenschutzparameter basiert.

3. Verfahren nach Anspruch 1 oder 2, wobei der Datenabrufverlustindikator und/oder der Daten-Nichtabrufverlustindikator basiert auf:

> einem Datensicherheitsparameter;
> einem Elastizitätsparameter; und/oder
> einem Latenzparameter.

4. Verfahren nach einem der Ansprüche 1 bis 3, wobei das Verfahren auf einer Anforderung-zu-Anforderung-Basis durchgeführt wird.

**5.** Verfahren nach einem der Ansprüche 1 bis 4, wobei die weiteren Daten für eine der Anforderungen und eine nachfolgende Anforderung abgerufen werden, und wobei die weiteren Daten für die andere der Anforderungen und die nachfolgende Anforderung nicht abgerufen werden.

**6.** Verfahren nach einem der Ansprüche 1 bis 5, wobei die anforderungsbasierte Variable eine Anforderungsbewertung, eine Anweisung, eine Prädikation und/oder eine Risikobewertung umfasst.

**7.** Verfahren nach einem der Ansprüche 1 bis 6, wobei:

wenn die anforderungsbasierte Variable und/oder die regenerierte anforderungsbasierte Variable darauf hinweist, dass die Anforderung mit einem hohen Risiko behaftet ist, die Entscheidung die Durchführung einer mit einer risikoreichen Anforderung verknüpften Aktion umfasst, wobei die mit der risikoreichen Anforderung verknüpfte Aktion optional die Ablehnung der Anforderung umfasst; und/oder wobei, wenn die anforderungsbasierte Variable und/oder die regenerierte anforderungsbasierte Variable darauf hinweist, dass die Anforderung mit einem niedrigen Risiko behaftet ist, die Entscheidung die Durchführung einer mit einer risikoarmen Anforderung verknüpften Aktion umfasst, wobei die mit der risikoarmen Anforderung verknüpfte Aktion optional die Annahme der Anforderung erfasst.

**8.** Verfahren nach einem der Ansprüche 1 bis 7, wobei, wenn die anforderungsbasierte Variable und/oder die regenerierte anforderungsbasierte Variable darauf hinweist, dass die Anforderung mit einem mittleren Risiko behaftet ist, eine mit einer Anforderung mit mittlerem Risiko verknüpfte Aktion durchgeführt wird,

wobei die mit der Anforderung mit mittlerem Risiko verknüpfte Aktion ferner das Bestimmen umfasst, ob die Verwendung der weiteren Daten als weitere Eingabe in das anforderungsbasierte Variablengenerierungsmodell die anforderungsbasierte Variable verändern kann, ferner optional, wobei als Reaktion auf das Bestimmen, dass das Abrufen der weiteren Daten die anforderungsbasierte Variable nicht verändern würde, die anforderungsbasierte Variable als die bestimmende anforderungsbasierte Variable verwendet wird.

**9.** Verfahren nach einem der Ansprüche 1 bis 8, wobei das anforderungsbasierte Variablengenerierungsmodell ein maschinelles Lernmodell umfasst.

**10.** Verfahren nach einem der Ansprüche 1 bis 9, wobei das Abrufen der weiteren Daten umfasst:

Abrufen der weiteren Daten aus einem lokalen Speicher; Abrufen der weiteren Daten aus einem externen Speicher; und/oder Anfordern und Empfangen der weiteren Daten von einer Ursprungsinstanz, wobei die Ursprungsinstanz die Anforderung ausgelöst hat.

**11.** Verfahren nach einem der Ansprüche 1 bis 10, wobei als Reaktion auf das Bestimmen, dass die Verwendung zusätzlicher Daten als zusätzliche Eingabe in das anforderungsbasierte Variablengenerierungsmodell die anforderungsbasierte Variable nicht verändern würde, die zusätzlichen Daten nicht abgerufen werden.

**12.** Verfahren nach einem der Ansprüche 1 bis 11, wobei das Generieren der anforderungsbasierten Variablen die Verwendung von in der Anforderung enthaltenen Anforderungsdaten umfasst.

**13.** Verfahren nach einem der Ansprüche 1 bis 12, wobei das Verfahren durchgeführt wird:

durch einen Entscheidungsserver; und/oder in einem anomalen Verhaltenerkennungssystem.

**14.** Entscheidungsserver, umfassend:

einen Anforderungsprozessor; einen anforderungsbasierten Variablengenerator; ein anforderungsbasiertes Variablengenerierungsmodell; eine Entscheidungskomponente; einen Komparator; und eine Datenabrufsteuerung, wobei der Entscheidungsserver konfiguriert ist, um ein Verfahren nach einem der Ansprüche 1 bis 13 durchzuführen.

**15.** System, Server und/oder Computerprogramm, das bzw. der konfiguriert ist, um ein Verfahren nach einem der Ansprüche 1 bis 13 auszuführen.

**Revendications**

**1.** Procédé de commande de récupération de données, le procédé comprenant :

la réception d'une demande ; la génération d'une variable basée sur la demande à l'aide de données associées à la demande, dans lequel les données sont entrées dans un modèle de génération de variable basée sur la demande pour générer la variable basée sur la demande ;

en réponse à la détermination que l'utilisation de données supplémentaires en guise d'entrée supplémentaire au modèle de génération de variable basée sur la demande peut modifier la variable basée sur la demande, le fait de déterminer s'il faut ou non récupérer les données supplémentaires en fonction d'une comparaison impliquant un indicateur de perte de récupération de données et un indicateur de perte de non-récupération de données, l'indicateur de perte de récupération de données indiquant une perte associée à la récupération des données supplémentaires et l'indicateur de perte de non-récupération de données indiquant une perte associée à la non-récupération des données supplémentaires ; et

la prise d'une décision associée à la demande en fonction d'une variable basée sur la demande déterminante,

dans lequel, lorsque la comparaison indique que la perte de récupération de données l'emporte sur la perte de non-récupération de données :

la détermination est de ne pas récupérer les données supplémentaires ; et
la variable basée sur la demande est utilisée en guise de variable basée sur la demande déterminante, et

dans lequel, lorsque la comparaison indique que la perte de non-récupération de données l'emporte sur la perte de récupération de données :

la détermination est de récupérer les données supplémentaires ;
les données supplémentaires sont récupérées ;
la variable basée sur la demande est régénérée à l'aide des données de demande et des données supplémentaires en guise d'entrées au modèle de génération de variable basée sur la demande pour générer une variable basée sur la demande régénérée ; et
la variable basée sur la demande régénérée est utilisée en guise de variable basée sur la demande déterminante.

2. Procédé selon la revendication 1, dans lequel l'indicateur de perte de récupération de données et/ou l'indicateur de perte de non-récupération de données sont en fonction d'un paramètre de confidentialité de données.

3. Procédé selon la revendication 1 ou 2, dans lequel l'indicateur de perte de récupération de données et/ou l'indicateur de perte de non-récupération de données sont en fonction de :

un paramètre de sécurité de données ;
un paramètre de résilience ; et/ou
un paramètre de latence.

4. Procédé selon l'une quelconque des revendications 1 à 3, dans lequel le procédé est mis en œuvre sur une base de demande par demande.

5. Procédé selon l'une quelconque des revendications 1 à 4, dans lequel les données supplémentaires sont récupérées pour l'une parmi la demande et une demande ultérieure, et dans lequel les données supplémentaires ne sont pas récupérées pour l'autre parmi la demande et la demande ultérieure.

6. Procédé selon l'une quelconque des revendications 1 à 5, dans lequel la variable basée sur la demande comprend un score de demande, une instruction, une prévision et/ou un score de risque.

7. Procédé selon l'une quelconque des revendications 1 à 6, dans lequel :

lorsque la variable basée sur la demande et/ou la variable basée sur la demande régénérée indiquent que la demande présente un risque élevé, la décision comprend la mise en œuvre d'une action associée à une demande à risque élevé, facultativement dans lequel l'action associée à la demande à risque élevé comprend le refus de la demande ; et/ou
dans lequel, lorsque la variable basée sur la demande et/ou la variable basée sur la demande régénérée indiquent que la demande présente un faible risque, la décision comprend la mise en œuvre d'une action associée à une demande à faible risque, facultativement dans lequel l'action associée à la demande à faible risque comprend l'acceptation de la demande.

8. Procédé selon l'une quelconque des revendications 1 à 7, dans lequel, lorsque la variable basée sur la demande et/ou la variable basée sur la demande régénérée indiquent que la demande présente un risque moyen, une action associée à une demande à risque moyen est mise en œuvre,

facultativement dans lequel l'action associée à la demande à risque moyen comprend le fait de déterminer si l'utilisation des données supplémentaires en guise d'entrée supplémentaire au modèle de génération de variable basée sur la demande peut modifier la variable basée sur la demande,

facultativement en outre dans lequel, en réponse à la détermination que la récupération des données supplémentaires ne modifierait pas la variable basée sur la demande, la variable basée sur la demande est utilisée en guise de variable basée sur la demande déterminante.

9. Procédé selon l'une quelconque des revendications 1 à 8, dans lequel le modèle de génération de variable basée sur la demande comprend un modèle d'apprentissage automatique.

10. Procédé selon l'une quelconque des revendications 1 à 9, dans lequel la récupération des données supplémentaires comprend :

la récupération des données supplémentaires auprès d'un stockage local ;
la récupération des données supplémentaires auprès d'un stockage externe ; et/ou
la demande et la réception des données supplémentaires auprès d'une entité d'origine, l'entité d'origine étant à l'origine de la demande.

11. Procédé selon l'une quelconque des revendications 1 à 10, dans lequel en réponse à la détermination que l'utilisation de données additionnelles en guise d'entrée additionnelle au modèle de génération de variable basée sur la demande ne modifierait pas la variable basée sur la demande, les données additionnelles ne sont pas récupérées.

12. Procédé selon l'une quelconque des revendications 1 à 11, dans lequel la génération de la variable basée sur la demande comprend l'utilisation de données de demande comprises dans la demande.

13. Procédé selon l'une quelconque des revendications 1 à 12, dans lequel le procédé est mis en œuvre :

par un serveur de décision ; et/ou
dans un système de détection de comportement anormal.

14. Serveur de décision comprenant :

un processeur de demande ;
un générateur de variable basée sur la demande ;
un modèle de génération de variable basée sur la demande ;
un composant de décision ;
un comparateur ; et
un dispositif de commande de récupération de données,
dans lequel le serveur de décision est configuré pour mettre en œuvre un procédé selon l'une quelconque des revendications 1 à 13.

15. Système, serveur et/ou programme informatique configurés pour mettre en œuvre un procédé selon l'une quelconque des revendications 1 à 13.

FIG. 1

200

202

Data Store

140

142

130

Decisioning
Server

Without Data
Retrieval Control

Data Store

140

142

130

Decisioning
Server

With Data
Retrieval Control

FIG. 2

302

300

304

306

308

Request

Generate
request score

Request
score >
decline
threshold

Y

Decline request

N

310

312

Request
score <
accept
threshold

Y

Accept request

N

314

316

Would
further data
likely change
request
score?

N

Use request
score

Y

318

Data retrieval
loss > data
non-retrieval
loss?

Y

N

FIG. 3A

B

A

300

(B)  (A)

320

**Acquire further data**

322

**Regenerate request score** → **Use regenerated request score**

326

324

FIG. 3B

FIG. 4

FIG. 5

FIG. 6

700

702

712

Request

Request Data

704

Data Store

Further Data

710

706

Request Score
Generation
Model

708

Determinative
Request Score

FIG. 7

800

Request Score Generation Model
816

Primary Request
Score Generation
Model
806

Regenerated
Request Score
Generation
Model
814

Request
Processor
802

Request Score
Generator
804

Comparator
810

Decisioning
808

Data Retrieval
Controller
812

Decisioning Server
800

FIG. 8

900

Receive a request.
902

Generate a request-based variable using data associated with the request as input to a request-based variable generation model.
904

In response to determining that using further data as further input to the request-based variable generation model may alter the request-based variable, determine whether or not to retrieve the further data based on a comparison involving a data retrieval loss indicator and a data non-retrieval loss indicator, the data retrieval loss indicator being indicative of a loss associated with retrieving the further data and the data non-retrieval loss indicator being indicative of a loss associated with not retrieving the further data.
906

Make a decision associated with the request based on a determinative request-based variable.
908

When the comparison indicates that the data retrieval loss outweighs the data non-retrieval loss: (i) the determination is not to retrieve the further data; and (ii) the request-based variable is used as the determinative request-based variable.
910

When the comparison indicates that the data non-retrieval loss outweighs the data retrieval loss: (i) the determination is to retrieve the further data; (ii) the further data is retrieved; (iii) the request-based variable is regenerated using the request data and the further data as inputs to the request-based variable generation model to generate a regenerated request-based variable; and (iv) the regenerated request-based variable is used as the determinative request-based variable.
912

FIG. 9

1000

1024 — Data Store

1026 — Network 1020

1022

1016

Decisioning
Server

1018 — Network 1012

1014

1008

Server

1028

1030

1004 — Network 1010

1002 — User Device 1006

FIG. 10

**EP 4 462 294 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3812929 A1